# EUROPEAN PATENT APPLICATION

(11) **EP 4 114 067 A1**
(43) Date of publication of application: **04.01.2023**
(21) Application number: 21760749.8
(22) Date of filing: 19.02.2021
(51) Int. Cl.: H04W 16/14, H04W 72/04, H04W 72/12, H04L 27/26

(54) **TERMINAL AND COMMUNICATION METHOD**

(30) Priority: 25.02.2020 JP 2020029728
(71) Applicant: NTT DOCOMO, INC., Chiyoda-Ku Tokyo 100-6150 (JP)
(72) Inventor: KUMAGAI, Shinya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/006479
(87) International publication number: WO 2021/172228

(57) **Abstract**

A terminal includes a reception unit configured to receive control information including information for allocating a plurality of uplink transmissions, from a base station, a control unit configured to identify a parameter applied to the plurality of uplinks, based on the control information, and a transmission unit configured to transmit the plurality of uplinks to the base station by applying the identified parameter to the plurality of uplinks.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc..

Further, existing LTE systems support the use of frequency bands different from the frequency bands licensed to telecommunication operators (also called unlicensed bands, unlicensed carriers, and unlicensed CCs), in order to expand frequency bands. Regarding the unlicensed bands, the 2.4-GHz band, the 5-GHz band, or the 6-GHz band where Wi-Fi (registered trademark) or Bluetooth (registered trademark) can be used, is assumed to be an unlicensed band.

Specifically, Rel-13 supports Carrier Aggregation (CA) in which a carrier (CC) of a licensed band and a carrier (CC) of a unlicensed band are integrated. Thus, communications using an unlicensed band together with a licensed band is called License-Assisted Access (LAA).

In a wireless communication system that performs communications using an unlicensed band together with a licensed band, a base station device (downlink) and a user terminal (uplink) perform channel sensing (carrier sensing) to check presence or non-presence of transmissions by other devices (e.g., base station device, user terminal, Wi-Fi device, or the like) prior to the data transmission in the unlicensed band. When a sensing result confirms that there is no transmission by other devices, a transmission opportunity can be obtained and transmissions are performed. This operation is called Listen Before Talk (LBT) . Also, in NR, a system that supports the unlicensed band is called an NR-U system.

### [Citation List]

### [Non-Patent Document]

[Non-Patent Document 1] 3GPP TS 38.331 V15.8.0 (2019-12)
[Non-Patent Document 2] 3GPP TS 38.212 V16.0.0 (2019-12)
[Non-Patent Document 3] 3GPP TS 38.213 V16.0.0 (2019-12)
[Non-Patent Document 4] 3GPP TS 37.213 V16.0.0 (2019-12)

### SUMMARY OF THE INVENTION

### [TECHNICAL PROBLEM]

Using an NR DCI (Downlink Control Information) format, a base station can indicate multiple UL transmissions in a single DCI. On the other hand, in a UL (Uplink) transmission in the NR-U system, the terminal needs to determine a parameter to be applied to the UL transmission, such as a channel access type, based on the DCI. Therefore, when multiple UL transmissions are indicated by a single DCI, it is unclear which of the UL transmissions a parameter indicated by the DCI should be applied to.

The present invention has been made in view of the foregoing, and it is an object of the present invention to determine a parameter to be applied to each uplink transmission in a case where multiple uplink transmissions are scheduled in a wireless communication system.

### [SOLUTION TO PROBLEM]

According to the disclosed technique, a terminal is provided that includes a reception unit configured to receive control information including information for allocating a plurality of uplink transmissions, from a base station, a control unit configured to identify a parameter applied to the plurality of uplinks, based on the control information, and a transmission unit configured to transmit the plurality of uplinks to the base station by applying the identified parameter to the plurality of uplinks.

### [ADVANTAGEOUS EFFECTS OF INVENTION]

According to the disclosed technique, a parameter to be applied to each uplink transmission can be determined in a case where multiple uplink transmissions are scheduled in a wireless communication system.

### BRIEF DESCRIPTION OF THE DRAWINGS

Fig. 1 is a drawing illustrating a configuration example of a wireless communication system according to an embodiment of the present invention.
Fig. 2 is a drawing illustrating a wireless communication system according to an embodiment of the present invention.
Fig. 3 is a drawing illustrating a multi-TTI grant.
Fig. 4 is a sequence diagram illustrating an example of signaling in an embodiment of the present invention.
Fig. 5 is a flowchart illustrating an example of an operation of a terminal 20 in an embodiment of the present invention.
Fig. 6 is a flowchart illustrating an example (1) in which PUSCH and SRS are transmitted in an embodiment of the present invention.
Fig. 7 is a flowchart illustrating an example (1) in which PUCCH and SRS are transmitted in an embodiment of the present invention.
Fig. 8 is a flowchart illustrating an example (2) in which PUSCH and SRS are transmitted in an embodiment of the present invention.
Fig. 9 is a flowchart illustrating an example (2) in which PUCCH and SRS are transmitted in an embodiment of the present invention.
Fig. 10 is a drawing illustrating an example (1) in which PUSCH and SRS are transmitted in a plurality of RB sets according to an embodiment of the present invention.
Fig. 11 is a drawing illustrating an example (2) in which PUSCH and SRS are transmitted in a plurality of RB sets according to an embodiment of the present invention.
Fig. 12 is a drawing illustrating an example (3) in which PUSCH and SRS are transmitted in a plurality of RB sets according to an embodiment of the present invention.
Fig. 13 is a drawing illustrating an example (4) in which PUSCH and SRS are transmitted in a plurality of RB sets according to an embodiment of the present invention.
Fig. 14 is a drawing illustrating an example (5) in which PUSCH and SRS are transmitted in a plurality of RB sets according to an embodiment of the present invention.
Fig. 15 is a drawing illustrating an example (6) in which PUSCH and SRS are transmitted in a plurality of RB sets according to an embodiment of the present invention.
Fig. 16 is a drawing illustrating an example (7) in which PUSCH and SRS are transmitted in a plurality of RB sets according to an embodiment of the present invention.
Fig. 17 is a drawing illustrating an example (1) in which PUCCH and SRS are transmitted in a plurality of RB sets according to an embodiment of the present invention.
Fig. 18 is a drawing illustrating an example (2) in which PUCCH and SRS are transmitted in a plurality of RB sets according to an embodiment of the present invention.
Fig. 19 is a drawing illustrating an example (3) in which PUCCH and SRS are transmitted in a plurality of RB sets according to an embodiment of the present invention.
Fig. 20 is a drawing illustrating an example (4) in which PUCCH and SRS are transmitted in a plurality of RB sets according to an embodiment of the present invention.
Fig. 21 is a drawing illustrating an example (5) in which PUCCH and SRS are transmitted in a plurality of RB sets according to an embodiment of the present invention.
Fig. 22 is a drawing illustrating an example (6) in which PUCCH and SRS are transmitted in a plurality of RB sets according to an embodiment of the present invention.
Fig. 23 is a drawing illustrating an example (7) in which PUCCH and SRS are transmitted in a plurality of RB sets according to an embodiment of the present invention.
Fig. 24 is a drawing illustrating an example of a functional structure of a base station 10 according to an embodiment of the present invention.
Fig. 25 is a drawing illustrating an example of a functional structure of a terminal 20 according to an embodiment of the present invention.
Fig. 26 is a drawing illustrating an example of a hardware structure of a base station 10 or a terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

Furthermore, in an embodiment of the present invention, the duplex method may be TDD (Time Division Duplex), FDD (Frequency Division Duplex), or other methods (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

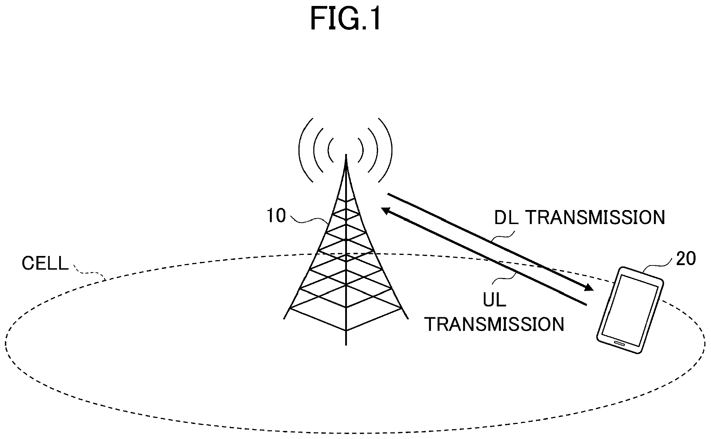

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks . The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. As shown in Fig. 1, the base station 10 transmits a control signal or data in DL (Downlink) to the terminal 20 and receives a control signal or data in UL (Uplink) from the terminal 20. The base station 10 and the terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (Scell: Secondary Cell) and a primary cell (PCell: Primary Cell) using CA (Carrier Aggregation). In addition, the terminal 20 may perform communications via a primary cell of the base station 10 and a primary secondary cell (PSCell: Primary Secondary Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10.

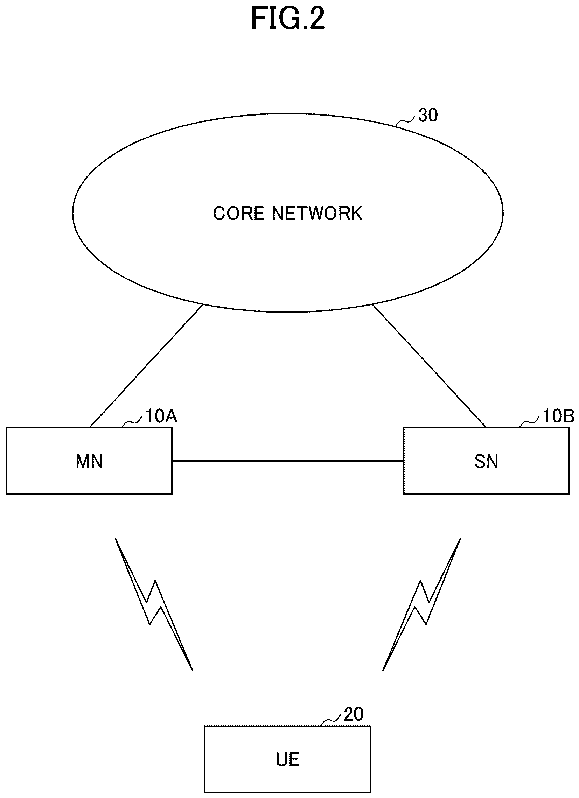

Fig. 2 is a drawing illustrating a wireless communication system according to an embodiment of the present invention. Fig. 2 shows an example of a configuration of a wireless communication system when NR-DC (NR-Dual connectivity) is performed. As shown in Fig. 2, a base station 10A serving as an MN (Master Node) and a base station 10B serving as an SN (Secondary Node) are provided. The base station 10A and the base station 10B are each connected to a core network 30. The terminal 20 communicates with both the base station 10A and the base station 10B.

A cell group provided by the base station 10A that is an MN is called an MCG (Master Cell Group), and a cell group provided by the base station 10B that is an SN is called an SCG (Secondary Cell Group) . Operations described below may be performed in any of the configurations of Fig. 1 and Fig. 2.

In a wireless communication system according to an embodiment of the present embodiment, the above-described LBT is performed. The base station 10 or the terminal 20 acquires COT (Channel Occupancy Time) and performs transmission in a case where the LBT result is idle (when the LBT is successful), and does not perform transmission in a case where the LBT result is busy (LBT-busy).

The wireless communication system according to an embodiment of the present invention may perform: a carrier aggregation (CA) operation using an unlicensed CC and a licensed CC; a dual connectivity (DC) operation using an unlicensed CC and a licensed CC; or a stand-alone (SA) operation using an unlicensed CC alone. CA, DC, or SA may be performed by any one system of NR and LTE. DC may be performed by at least two of NR, LTE, and other systems.

The terminal 20 may assume a presence of a signal within PDCCH or group-common (GC)-PDCCH to detect a transmission burst from the base station 10 (e.g., Reference Signal (RS) such as Demodulation Reference Signal (DMRS)).

The base station 10 may transmit a specific PDCCH (PDCCH or GC-PDCCH) including a specific DMRS indicating the start of COT at the start of COT initiated by the base station apparatus. At least one of the specific PDCCH and the specific DMRS may be referred to as a COT start indication signal. For example, the base station 10 may transmit a COT start indication signal to one or more terminals 20, and a terminal 20 can recognize COT in a case where a specific DMRS is detected.

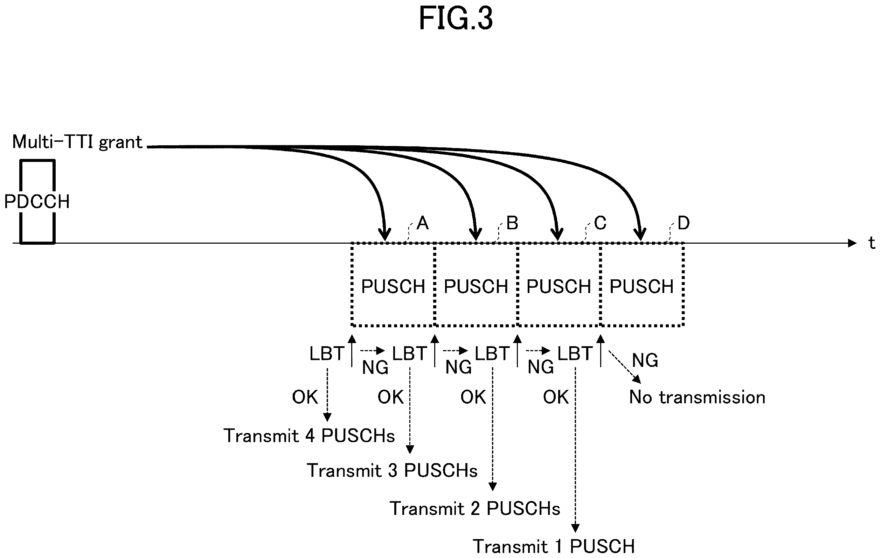

Fig. 3 is a drawing illustrating a multi-TTI grant. In Release 16NR-U, the use of Multi-TTI (Transmission Time Interval) grant for scheduling multiple PUSCHs across multiple slots/minislots with a single DCI (Downlink Control Information) is assumed. Note that the phrase "scheduling" may be replaced with "allocating".

Consecutive PUSCHs for transmitting separate TBs (Transport block) are scheduled by a multi-TTI grant. One TB is mapped to one slot or one minislot and transmitted via one PUSCH. One HARQ (Hybrid automatic repeat request) process is assigned to the one PUSCH used for transmitting the one TB.

Regarding the multiple PUSCHs scheduled by one DCI, NDI (New data indicator) and RV (Redundancy version) are signaled for each PUSCH by the one DCI. Further, the HARQ process ID indicated by the DCI is applied to the scheduled first PUSCH, and, regarding HARQ process IDs for the subsequent PUSCHs, values incremented one by one in the order of PUSCHs are applied.

Fig. 3 is a drawing illustrating an example of an operation of the terminal 20 that has received a multi-TTI grant. In an example of Fig. 3, four slots of PUSCHs are scheduled by a multi-TTI grant.

The terminal 20 performs LBT before the scheduled slot of the first PUSCH indicated by A, and transmits data via four consecutive PUSCHs if the LBT is OK. If the first LBT is NG, LBT is performed before the scheduled slot of PUSCH indicated by B. If the LBT is OK, data is transmitted via three consecutive PUSCHs. Substantially the same process is performed thereafter. If LBT is performed before the scheduled slot of the the last PUSCH indicated by D and is NG, no transmission is performed.

For example, a PUSCH scheduling may include a plurality of separated slots or minislots. A plurality of slots or minislots including a plurality of consecutive PUSCHs may be supported by a single DCI. Further, for example, the DCI signaling a plurality of PUSCHs may include NDI and RV. Further, for example, CBG (Code block group)-based retransmission may be supported by a plurality of PUSCH schedulings. Signaling may be performed by a DCI field for each of the retransmitted PUSCHs, for each PUSCH, or for each of a fixed number of PUSCHs. Further, for example, the HARQ process ID signaled by DCI may be applied to the first scheduled PUSCH and may be incremented one by one for each of subsequent PUSCHs.

Further, for example, the resource allocation of the time domain in which PUSCH is scheduled may be extended. For example, the range of start symbol position and end symbol position may be extended, the consecutive resource allocations of time domain may be extended, a plurality of PUSCHs may be arranged in the first slot, and a plurality of start symbol positions may be supported in the terminal-initiated COT.

Further, in NR-U, regarding the UL grant with non-fallback DCI, operations shown in 1)-4) below may be performed. Note that the non-fallback DCI format is, for example, DCI format 1 1 and DCI format 0_1 in an NR system. The non-fallback DCI format is, for example, a DCI format whose size is greater than the fallback DCI format 1_0 and DCI format 0_0. Unlike the fallback DCI format, the size of the non-fallback DCI format is changed depending on the configuration. Hereinafter, "*" indicates multiplication.
1) LBT type, CP extension value, and CAPC (Channel Access Priority Class) may be included in the UL grant using joint encoding (in other words, using indexes that are associated with combinations thereof).
2)The combinations of LBT type, CP extension value, and CAPC may be configured to the terminal 20 by terminal 20 specific RRC signaling.
3) From among the combinations of LBT type {Cat1-16µs, Cat2-16µs, Cat2-25µs, Cat4}, CP extension {0,C1* symbol length-25µs, C2* symbol length-16µs-TA, C3* symbol length-25µs-TA}, and CAPC {1, 2, 3, 4}, combinations with (Cat2-25µs, C2* symbol length-16µs-TA), (Cat1-16µs, C3* symbol length-25µs-TA), (Cat2-16µs, C3* symbol length-25µs-TA), and (Cat2-16µs or Cat2-16µs, C1* symbol length-25µs) may not be supported by RRC configurations.
4) The corresponding DCI bit field may be up to 6 bits long. The length of the bit field may be determined depending on the number of combinations configured by RRC signaling to the terminal 20.

Regarding the non-fallback DL allocation that schedules UL transmission (e.g., PUCCH), operations shown in 1)-5 below may be performed.
1) LBT type and CP extension value may be joint encoded and included in the DL allocation.
2) The highest CAPC may always be assumed.
3) The combinations of LBT type and CP extension value may be configured to the terminal 20 by terminal 20 specific RRC signaling.
4) From among the combinations of LBT type {Cat1-16µs, Cat2-16µs, Cat2-25µs, Cat4}, and CP extension {0, C1* symbol length-25µs, C2* symbol length-16µs-TA, C3* symbol length-25µs-TA}, combinations with (Cat2-25µs, C2* symbol length-16µs-TA), (Cat1-16µs, C3* symbol length-25µs-TA), (Cat2-16µs, C3* symbol length-25µs-TA), and (Cat2-16µs, or, Cat2-16µs, C1* symbol length-25µs) may not be supported by the RRC configuration.
5) The corresponding DCI bit field may be up to 4 bits long. The length of the bit field may be determined depending on the number of combinations configured by RRC signaling to the terminal 20.

On the other hand, in the UL grant with fallback DCI, LBT type, CP extension value, and CAPC may be included in the UL grant by two-bit joint encoding. Note that the combinations of LBT type, CP extension value, and CAPC supported may be predefined by technical specifications.

Also, in fallback DL allocations scheduling UL transmission (e.g., PUCCH), LBT type and CP extension value may be included in the DL allocation by two-bit joint encoding. Note that the supported combinations of LBT type and CP extension value may be predefined by technical specifications.

Here, FBE (Frame Based Equipment) and LBE (Load Based Equipment) have been discussed as mechanisms of LBT. The difference between the two is a frame structure used for transmission and reception, a channel occupancy time, etc. FBE has fixed timings for the LBT transmission and reception configuration. On the other hand, in LBE, the LBT transmission and reception configuration is not fixed in the time axis direction, and LBT is performed according to the demand. Specifically, FBE has a fixed frame period and performs carrier sensing for a predetermined period of time (also referred to as "LBT duration") . Transmission is performed when the channel is available as a result of the sensing. Transmission is not performed when the channel is not available as a result of the sensing, and the transmission is postponed until the carrier sensing timing for the next frame.

On the other hand, in LBE, ECCA (Extended CCA) procedure is performed in which, when the channel is not available as a result of the carrier sensing (Initial Clear Channel Assessment (CCA)), the carrier sensing time is extended and the carrier sensing is continued until the channel becomes available. In LBE, the random backoff is required in order to appropriately avoid collisions.

In a case where LBT is operated according to LBE, signaling of LBT type and CP extension value for both fallback DL allocation and fallback UL grant may be performed using, for example, Table 1.

**[Table 1]**

| LBT Type | CP extension |
|---|---|
| Cat1 16 µs | C2*symbol length-16 us-TA |
| Cat2 25 µs | C3*symbol length-25 us-TA |
| Cat2 25 µs | C1*symbol length-25 us |
| Cat4 | 0 |

"Cat1" shown in Table 1 corresponds to category 1, "Cat2" corresponds to category 2, and "Cat4" corresponds to category 4. As shown in Table 1, in a case where the LBT type is "Cat1-16 µs", the CP extension value may be "C2*symbol length-16 µs-TA". Further, in a case where the LBT type is "Cat2-25 µs", the CP extension value may be "C3*symbol length-25 µs-TA". Further in a case where the LBT type is "Cat2-25 µs", the CP extension value may be "C1*symbol length-25 µs". Further in a case where the LBT type is "Cat4", the CP extension value may be "0".

Note that the channel access type (LBT type) is a type of channel access method that uses a random period or a fixed period during which the terminal 20 determines that the sensed slot is idle before the UL transmission. The channel access type 1 corresponds to "Cat4", the channel access type 2A corresponds to "Cat2-25µs", and the channel access type 2C corresponds to "Cat21-16µs".

Note that CAPC may not be explicitly indicated. With respect to the UL grant, the terminal 20 may assume CAPC=4 used by the base station 10, for obtaining CO. Also, in a case of the terminal 20 initiated COT or category 4, the terminal 20 itself may select the CAPC. Note that the mapping between the CAPC and the traffic class may be the same as the mapping defined for UL-CG (Configured Grant) transmission. Note that, in a case where LBT of category 4 is used, the CAPC with the highest priority may be used for PUCCH associated with the DL allocation.

In a case where the LBT is operated according to FBE, the terminal 20, to which "Cat2-25 µs" or "Cat4" is indicated as the LBT type, may measure one 9 µs carrier sensing slot within a period of 25 µs.

Also, regarding RAR (Random Access Response), the terminal 20 may use: the same table (e.g., Table 1) of LBT type and CP extension value; and the same CAPC selection method, as those of the UL grant by fallback DCI. For the sake of the above-described operation, two bits may be signaled via a RAR (i.e., PDSCH). In a case where the terminal 20 performs multiplexing of user plane data in PUSCH, the terminal 20 may assume that the base station 10 has used CAPC=4, for obtaining CO. Also, in a case of the terminal 20 initiated COT or category 4, the terminal 20 itself may select the CAPC. Note that the mapping between the CAPC and the traffic class may be the same as the mapping defined for UL-CG transmission. Also, the field indicating the resource allocation of the frequency domain included in the RAR is reduced in order to accommodate the above-described two bits.

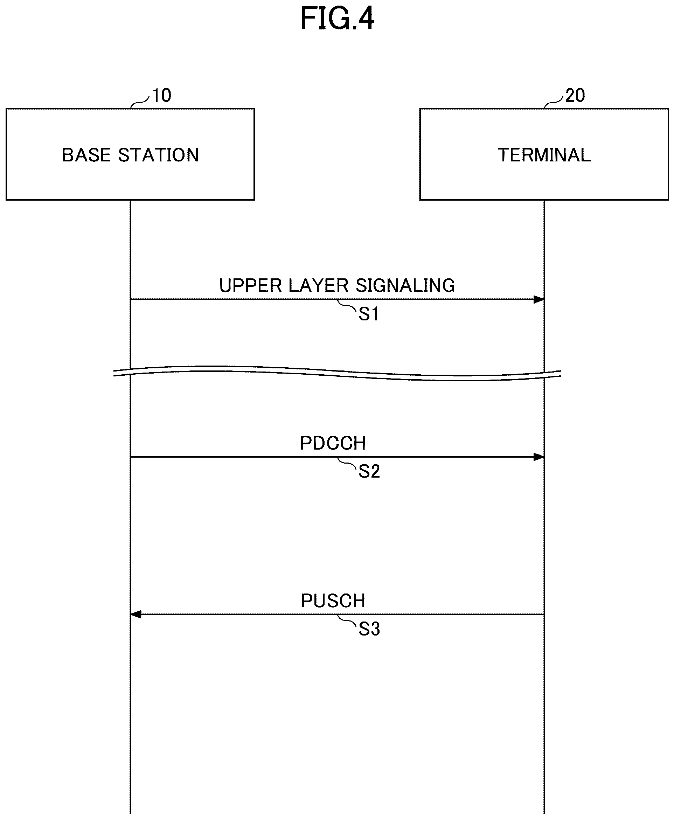

Fig. 4 is a sequence diagram illustrating an example of signaling in an embodiment of the present invention. The base station 10 may instruct the terminal 20 to transmit PUSCH and/or PUCCH or may configure the transmission opportunity using step S1 and step S2. The terminal 20 may, for example, appropriately determine a CP extension value even before the RRC configuration is performed by step S1.

In step S1, the base station 10 indicates, to the terminal 20, the configuration related to PUSCH and/or PUCCH via higher layer signaling. For example, the configuration related to CP extension may be indicated.

In step S2, the base station 10 transmits a UL grant by DCI to the terminal 20 via PDCCH. Subsequently, the terminal 20 transmits data to the base station 10 via PUSCH that is determined based on the received DCI (S3). Multiple UL transmissions may be scheduled by the DCI. Further, in a case where a CP extension value is indicated by the DCI, the terminal 20 may perform transmission by applying the channel access type, the CP extension, or the CAPC to the PUSCH.

Further, as another example, in step S2, the base station 10 transmits the DL allocation by the DCI to the terminal 20 via PDCCH. Subsequently, the terminal 20 transmits the uplink control information (UCI) to the base station 10 via PUCCH that is determined based on the received DCI (S3). In a case where a channel access type or CP extension has been indicated by the DCI, the terminal 20 may perform transmission by applying the channel access type or the CP extension to the PUCCH.

Further, as another example, in step S2, the base station 10 transmits an RAR to the terminal 20 via PDSCH. Subsequently, the terminal 20 transmits data to the base station 10 via PUSCH that is determined based on the received DCI (S3) . In a case where a channel access type, CP extension, or CAPC is indicated by the RAR, the terminal 20 may perform transmission by applying the channel access type, the CP extension, or the CAPC to the PUSCH.

As described above, in NR, multiple UL transmissions can be indicated by a single DCI. For example, a DCI format 0 1 indicating a non-fallback UL grant can be used to instruct terminal 20 to transmit an A-SRS (Aperiodic Sounding Reference Signal) (SRS request) in addition to PUSCH. Also, for example, a DCI format 1_1 indicating a non-fallback DL allocation can be used to instruct the terminal 20 to transmit an A-SRS (SRS request) in addition to PUCCH.

With the DCI format 0 1, a channel access type, a CP extension value, and CAPC to be applied to UL transmission are indicated to the terminal 20 by a field (0 bit-6 bit, which can be configured by RRC) indicating the channel access type, the CP extension, and the CAPC.

With the DCI format 0 1, a channel access type, a CP extension value, and CAPC to be applied to UL transmission are indicated to the terminal 20 by a field (0 bit-4 bit, which can be configured by RRC) indicating the channel access type, the CP extension, and the CAPC.

Here, in a case where multiple UL transmissions are indicated by a single DCI, it is unclear for the terminal 20 which UL transmission the channel access type, the CP extension value, or the CAPC indicated by the DCI format 0_1 or the DCI format 1_1 is to be applied to.

Accordingly, in a case where multiple UL transmissions are indicated in the UL transmission of NR-U, the terminal 20 appropriately configures a channel access type, CP extension value, or CAPC for each UL transmission.

For example, in a case where multiple UL transmissions are indicated by DCI, the terminal 20 identifies UL transmission to which a channel access type, a CP extension value, or CAPC is to be applied, as shown in, for example, 1)-3) below.
1) The channel access type, CP extension value, or CAPC is applied to all UL transmissions for which transmission is indicated regardless of the type, time, or frequency position of each UL transmission.
2) The channel access type, CP extension, or CAPC is applied to a particular type of UL transmission.
3) The channel access type, CP extension, or CAPC is applied to a UL transmission with a particular time or frequency position.

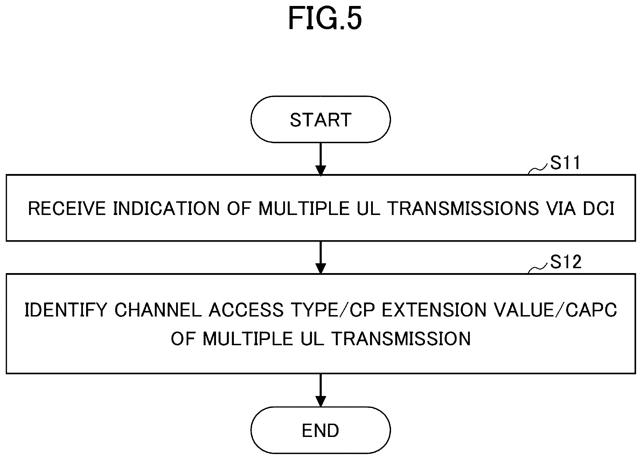

Fig. 5 is a flowchart illustrating an example of an operation of a terminal 20 in an embodiment of the present invention. In step S11, the terminal 20 is instructed by the base station 10 to perform a plurality of UL transmissions via DCI. Subsequently, the terminal 20 identifies a channel access type, a CP extension value, or CAPC for the plurality of UL transmissions (step S12).

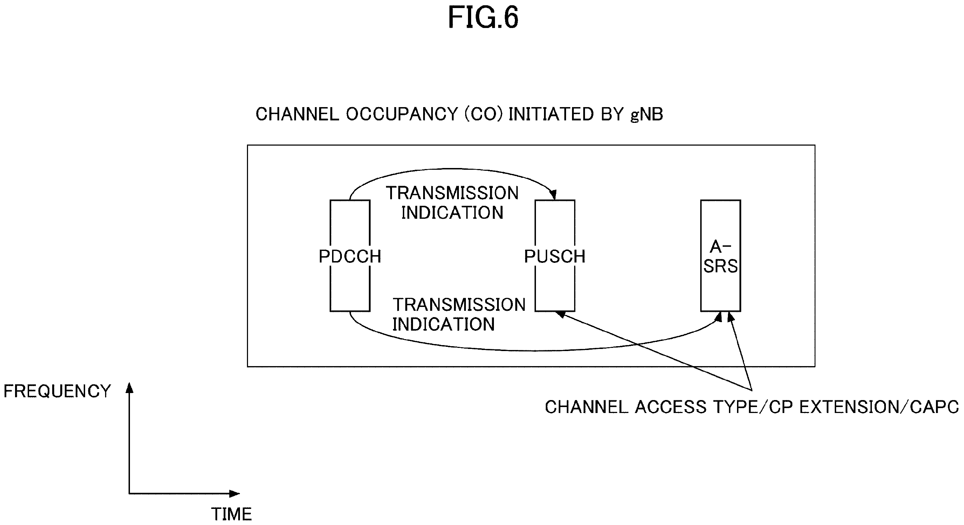

Fig. 6 is a drawing illustrating an example (1) in which PUSCH and SRS are transmitted in an embodiment of the present invention. As shown in Fig. 6, PUSCH and A-SRS may be instructed to be transmitted by DCI format 0 1 of PDCCH. Table 2 shows an example of a table used when the channel access type, the CP extension values, and the CAPC are specified by DCI (e.g., Non-Patent Document 2).

**[Table 2]**

| Entry index | Channel Access Type | CP extension | CAPC |
|---|---|---|---|
| 0 | Type2C-ULChannelAccess | 0 | 1 |
| 1 | Type2C-ULChannelAccess | 0 | 2 |
| 2 | Type2C-ULChannelAccess | 0 | 3 |
| 3 | Type2C-ULChannelAccess | 0 | 4 |
| 4 | Type2C-ULChannelAccess | C2*symbol length-16 us-TA | 1 |
| 5 | Type2C-ULChannelAccess | C2*symbol length-16 us-TA | 2 |
| 6 | Type2C-ULChannelAccess | C2*symbol length-16 us-TA | 3 |
| 7 | Type2C-ULChannelAccess | C2*symbol length-16 us-TA | 4 |
| 8 | Type2B-ULChannelAccess | 0 | 1 |
| 9 | Type2B-ULChannelAccess | 0 | 2 |
| 10 | Type2B-ULChannelAccess | 0 | 3 |
| 11 | Type2B-ULChannelAccess | 0 | 4 |
| 12 | Type2B-ULChannelAccess | C2*symbol length-16 us-TA | 1 |
| 13 | Type2B-ULChannelAccess | C2*symbol length-16 us-TA | 2 |
| 14 | Type2B-ULChannelAccess | C2*symbol length-16 us-TA | 3 |
| 15 | Type2B-ULChannelAccess | C2*symbol length-16 us-TA | 4 |
| 16 | Type2A-ULChannelAccess | 0 | 1 |
| 17 | Type2A-ULChannelAccess | 0 | 2 |
| : | : | : | : |

As shown in Table 2, the channel access type, the CP extension, and the CAPC are indicated to the terminal 20 via the "Entry index". The terminal 20 may perform UL transmission by applying the channel access type, CP extension value, and CAPC corresponding to the Entry ndex#n to both PUSCH and A-SRS that are instructed to be transmitted. Note that the terminal 20 may assume a specific value (e.g., "1") as the CAPC to be applied to A-SRS.

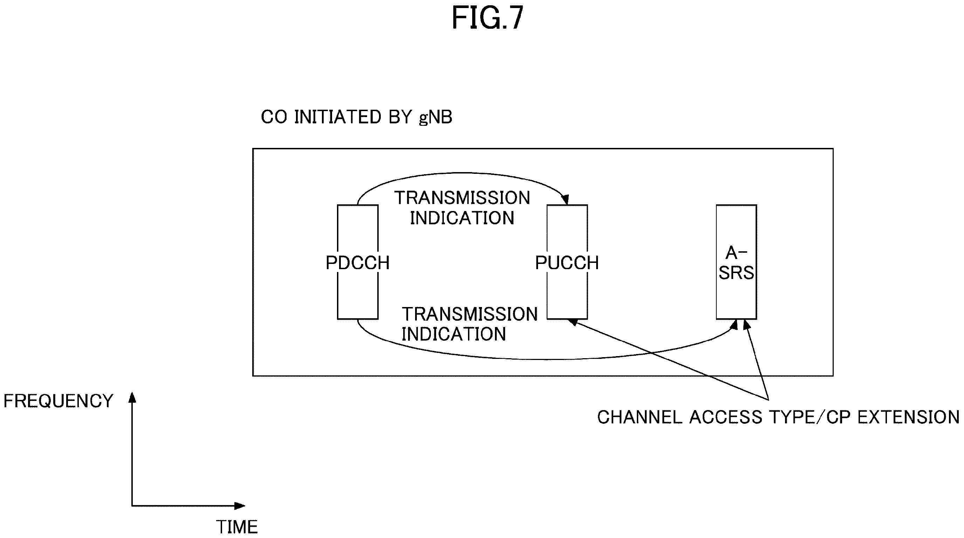

Fig. 7 is a drawing illustrating an example (1) in which PUSCH and SRS are transmitted in an embodiment of the present invention. As shown in Fig. 7, PUSCH and A-SRS may be instructed to be transmitted by DCI format 1_1 of PDCCH. Table 2 shows an example of a table used when the channel access type and the CP extension value are specified by DCI (e.g., Non-Patent Document 2).

**[Table 3]**

| Entry index | Channel Access Type | CP extension |
|---|---|---|
| 0 | Type2C-ULChannelAccess | 0 |
| 1 | Type2C-ULChannelAccess | C2*symbol length-16 us-TA |
| 2 | Type2B-ULChannelAccess | 0 |
| 3 | Type2B-ULChannelAccess | C2*symbol length-16 us-TA |
| 4 | Type2A-ULChannelAccess | 0 |
| 5 | Type2A-ULChannelAccess | 1*symbol length-25 us |
| 6 | Type2A-ULChannelAccess | C3*symbol length-25 us-TA |
| 7 | Type1-ULChannelAccess | 0 |
| 8 | Type1-ULChannelAccess | 1*symbol length-25 us |
| 9 | Type1-ULChannelAccess | C2*symbol length-16 us-TA |
| 10 | Type1-ULChannelAccess | C3*symbol length-25 us-TA |

As shown in Table 3, the channel access type and the CP extension are indicated to the terminal 20 via the "Entry index". The terminal 20 may perform UL transmission by applying the channel access type and the CP extension value corresponding to the Entry index#n to both PUCCH and A-SRS that are instructed to be transmitted. Note that the terminal 20 may assume a specific value (e.g., "1") as the CAPC applied to A-SRS.

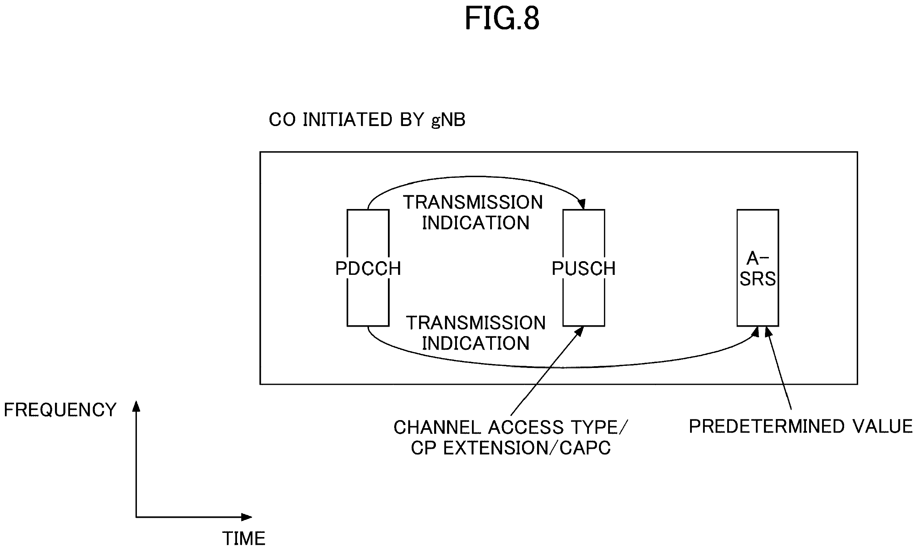

Fig. 8 is a drawing illustrating an example (2) in which PUSCH and SRS are transmitted in an embodiment of the present invention. As shown in Fig. 8, PUSCH and A-SRS may be instructed to be transmitted by DCI format 0_1 of PDCCH.

The terminal 20 may transmit PUSCH by applying the channel access type, CP extension, and CAPC indicated by the Entry index#n shown in Table 2. On the other hand, the terminal 20 may perform UL transmission of A-SRS by applying predetermined channel access type, CP extension value, and CAPC. The predetermined channel access type, CP extension value, and CAPC may be specified in technical specifications or configured by upper-layer signaling (e.g., indicated by Entry index#x).

Note that predetermined channel access type, CP extension value, and CAPC may be applied to PUSCH, and the channel access type, the CP extension value, and the CAPC indicated by Entry index#n may be applied to A-SRS.

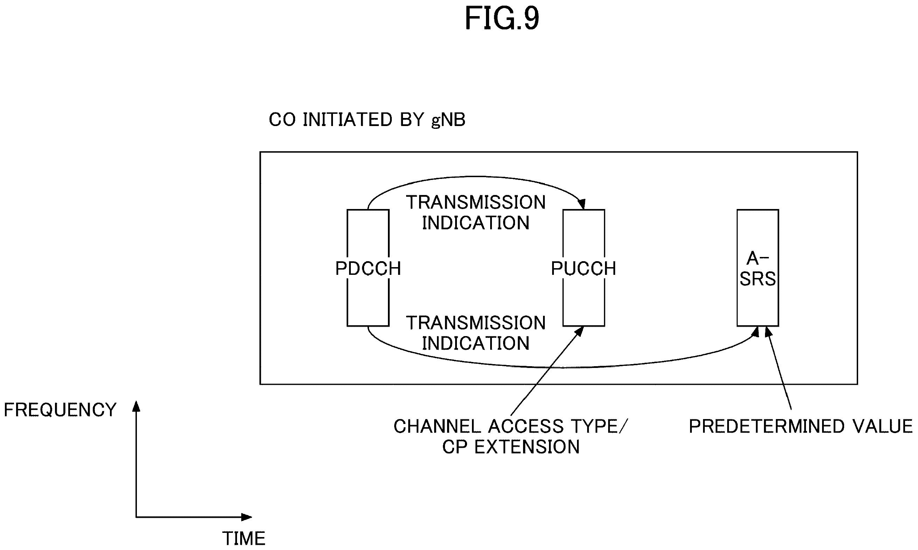

Fig. 9 is a drawing illustrating an example (2) in which PUSCH and SRS are transmitted in an embodiment of the present invention. As shown in Fig. 9, PUSCH and A-SRS may be instructed to be transmitted according to DCI format 1_1 of PDCCH.

The terminal 20 may transmit PUSCH by applying the channel access type and CP extension value indicated by the Entry index#n shown in Table 3. On the other hand, A-SRS may be transmitted by applying a predetermined channel access type and CP extension value. The predetermined channel access type, CP extension value, and CAPC may be specified in technical specifications or configured by upper-layer signaling (e.g., indicated by Entry index#x).

Note that predetermined channel access type, CP extension value, and CAPC may be applied to PUSCH, and the channel access type, the CP extension value, and the CAPC indicated by Entry index#n may be applied to A-SRS.

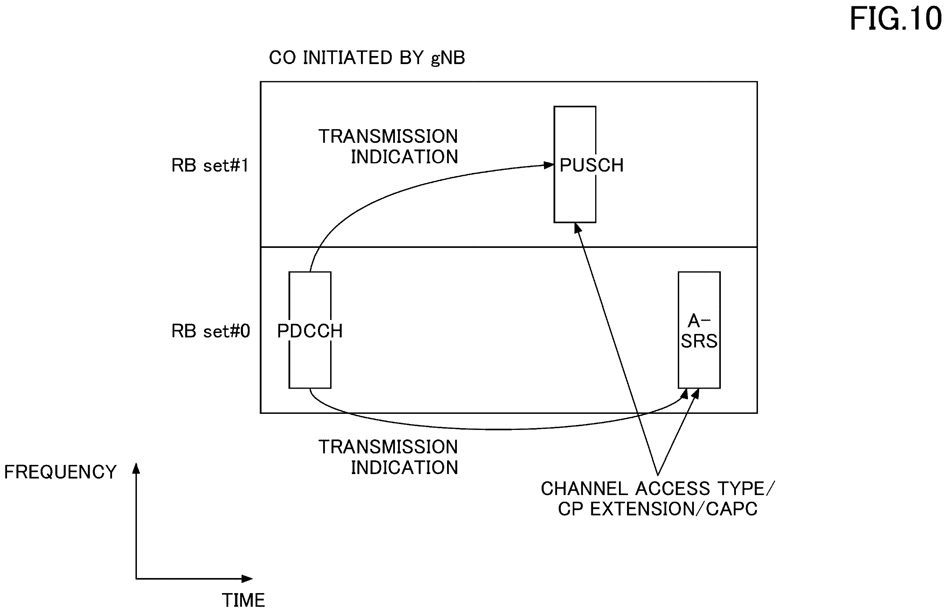

Fig. 10 is a drawing illustrating an example (1) in which PUSCH and SRS are transmitted in a plurality of RB sets according to an embodiment of the present invention. As shown in Fig. 10, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the first UL transmission within each RB set (corresponding to the LBT sub-band). As shown in Fig. 10, A-SRS is transmitted first in the RB set #0, and thus, the channel access type, the CP extension value, and the CAPC indicated by Entry index #n are applied to the A-SRS. Further, PUSCH is transmitted first in RB set #1, and thus, the channel access type, the CP extension value, and the CAPC indicated by Entry index #n are applied to the PUSCH. Note that the terminal 20 may assume a specific value (e.g., "1") as the CAPC to be applied to A-SRS.

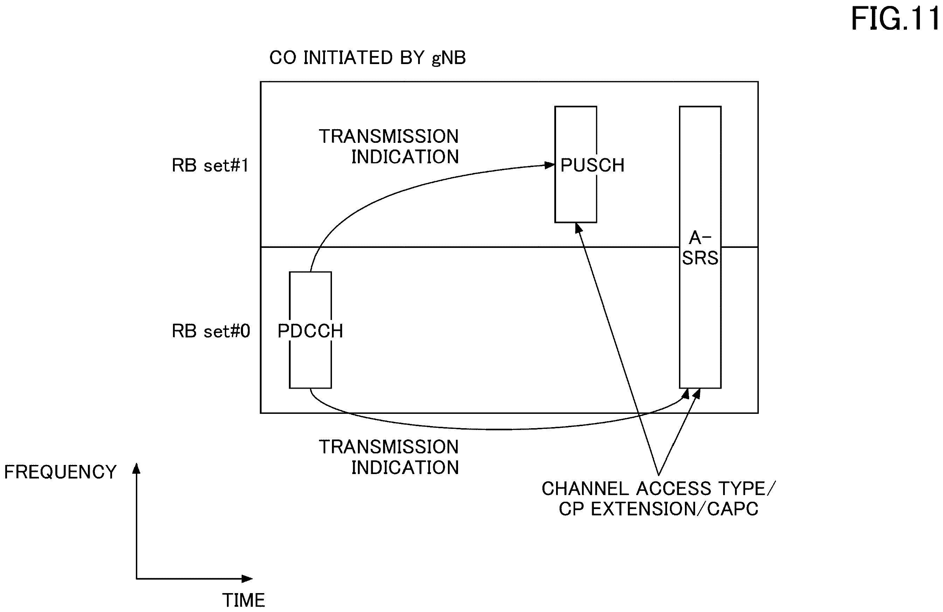

Fig. 11 is a drawing illustrating an example (2) in which PUSCH and SRS are transmitted in a plurality of RB sets according to an embodiment of the present invention. As shown in Fig. 11, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the first UL transmission within each RB set (corresponding to the LBT sub-band). As shown in Fig. 11, A-SRS is transmitted first in the RB set #0, and thus, the channel access type, the CP extension value, and the CAPC indicated by Entry index #n are applied to the A-SRS. Further, PUSCH is transmitted first in RB set #1, and thus, the channel access type, the CP extension value, and the CAPC indicated by Entry index #n are applied to the PUSCH. Note that the terminal 20 may assume a specific value (e.g., "1") as the CAPC to be applied to A-SRS.

Note that, regarding the A-SRS transmitted by a plurality of RB sets, the channel access type, the CP extension value, and the CAPC may be applied to the A-SRS in a case where A-SRS is transmitted first in any one of the RB sets, or only in a case where A-SRS is transmitted first in all of the RB sets.

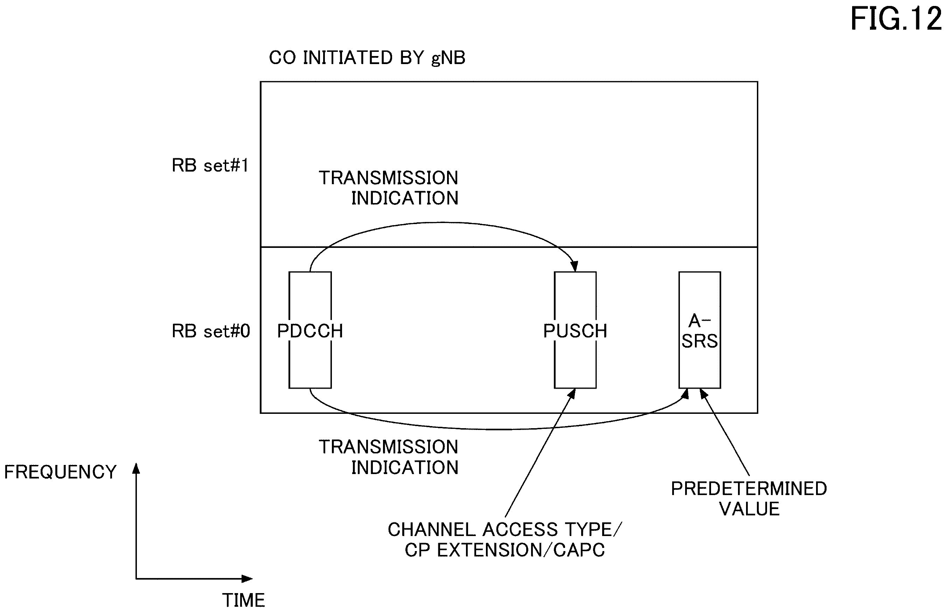

Fig. 12 is a drawing illustrating an example (3) in which PUSCH and SRS are transmitted in a plurality of RB sets according to an embodiment of the present invention. As shown in Fig. 12, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the first UL transmission within each RB set (corresponding to the LBT sub-band). In addition, the terminal 20 may apply the predetermined channel access type, CP extension value, and CAPC to UL transmissions transmitted in the second place and subsequent places in each RB set. The predetermined channel access type, CP extension value, and CAPC may be specified in technical specifications or configured by upper-layer signaling (e.g., indicated by Entry index#x).

In Fig. 12, the channel access type, the CP extension value, and the CAPC indicated by Entry index#n shown in Table 2 may be applied to PUSCH because PUSCH is transmitted first in RB set #0 and RB set #1. Further, the predetermined channel access type, CP extension value, and CAPC may be applied to A-SRS because A-SRS is transmitted in the second place in RB set #0 in Fig. 12.

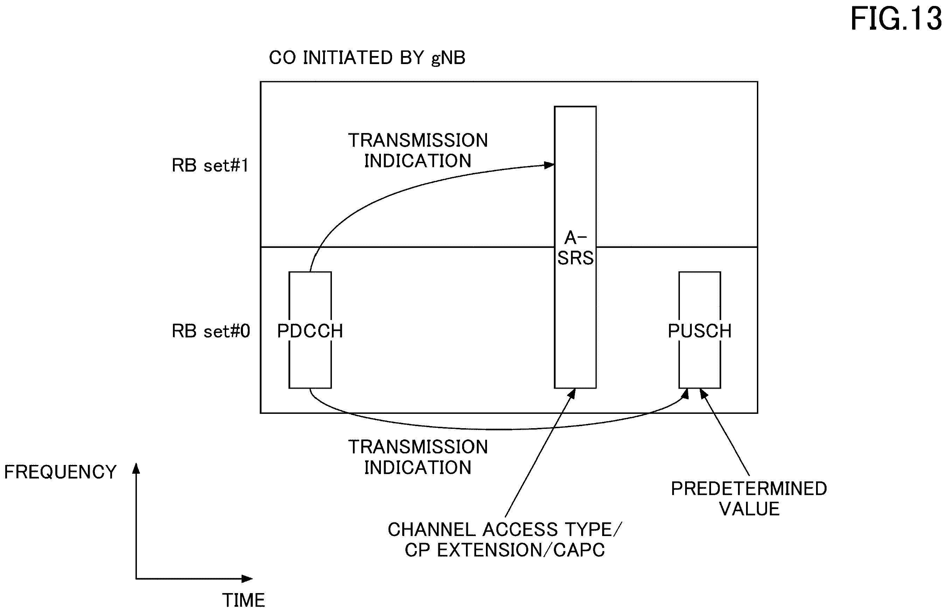

Fig. 13 is a drawing illustrating an example (4) in which PUSCH and SRS are transmitted in a plurality of RB sets according to an embodiment of the present invention. As shown in Fig. 13, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the first UL transmission within each RB set (corresponding to the LBT sub-band). In addition, the terminal 20 may apply the predetermined channel access type, CP extension value, and CAPC to UL transmissions transmitted in the second place and subsequent places in each RB set. The predetermined channel access type, CP extension value, and CAPC may be specified in technical specifications or configured by upper-layer signaling (e.g., indicated by Entry index#x).

In Fig. 13, the channel access type, the CP extension value, and the CAPC indicated by Entry index#n shown in Table 2 may be applied to A-SRS because A-SRS is transmitted first in RB set #0 and RB set #1. Further, the predetermined channel access type, the CP extension value, and the CAPC may be applied to PUSCH because PUSCH is transmitted in the second place in RB set #0 in Fig. 13.

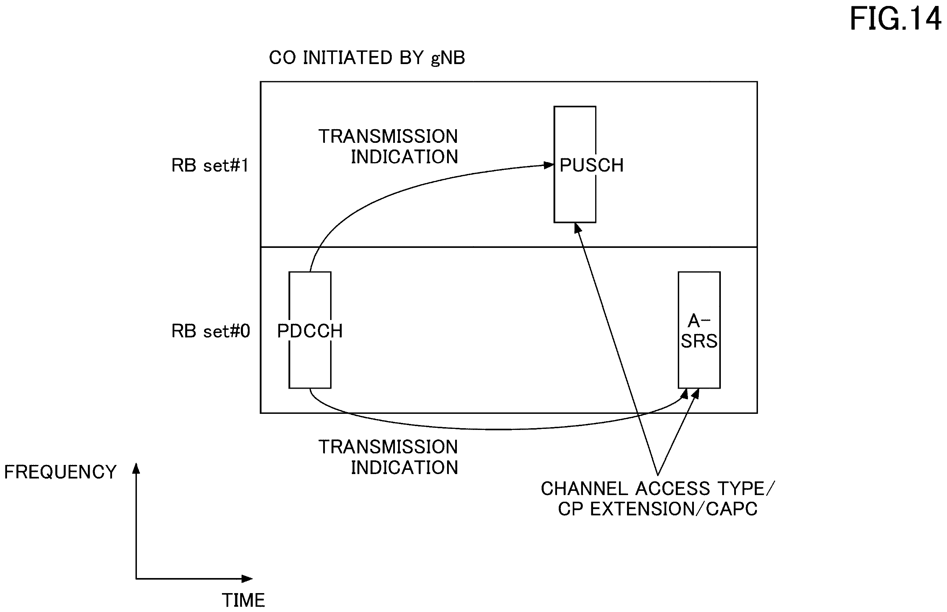

Fig. 14 is a drawing illustrating an example (5) in which PUSCH and SRS are transmitted in a plurality of RB sets according to an embodiment of the present invention. As shown in Fig. 14, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the UL transmission, transmitted within the gNB initiated CO, of each RB set (corresponding to the LBT sub-band) . In addition, the terminal 20 may apply the predetermined channel access type, CP extension value, and CAPC to UL transmissions, transmitted within the gNB initiated CO, of each RB set. The predetermined channel access type, CP extension value, and CAPC may be specified in technical specifications or configured by upper-layer signaling (e.g., indicated by Entry index#x).

In Fig. 14, because PUSCH is within the gNB initiated CO of RB set #0 and A-SRS is within the gNB initiated CO of RB set #1, the channel access type, CP extension value, and CAPC indicated by Entry index #n shown in Table 2 may be applied to the PUSCH and the A-SRS.

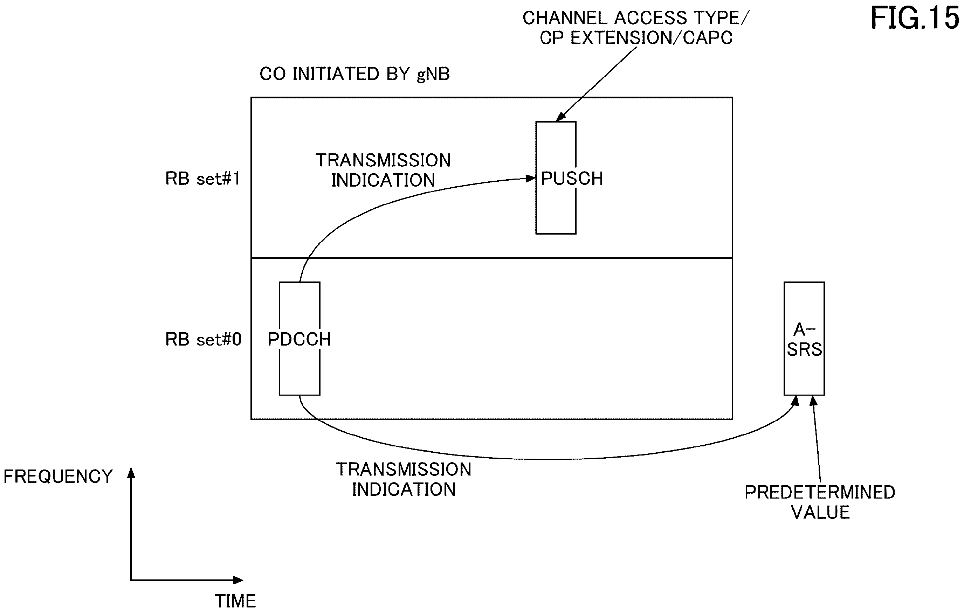

Fig. 15 is a drawing illustrating an example (6) in which PUSCH and SRS are transmitted in a plurality of RB sets according to an embodiment of the present invention. As shown in Fig. 15, PUSCH and A-SRS may be instructed to be transmitted by DCI format 0_1 of PDCCH.

The terminal 20 may perform transmission by applying the channel access type, the CP extension value, and the CAPC indicated by Entry index#n shown in Table 2 to the UL transmission, transmitted within the gNB initiated CO, of each RB set (corresponding to the LBT sub-band) . In addition, the terminal 20 may apply the predetermined channel access type, CP extension value, and CAPC to UL transmissions, transmitted within the gNB initiated CO, of each RB set. The predetermined channel access type, CP extension value, and CAPC may be specified in technical specifications or configured by upper-layer signaling (e.g., indicated by Entry index#x).

In Fig. 15, the channel access type, the CP extension value, and the CAPC indicated by Entry index#n shown in Table 2 may be applied to PUSCH because PUSCH is within the gNB initiated CO of RB set #1. On the other hand, the predetermined channel access type, CP extension value, and CAPC may be applied to A-SRS because A-SRS is outside the gNB initiated CO of RB set #0.

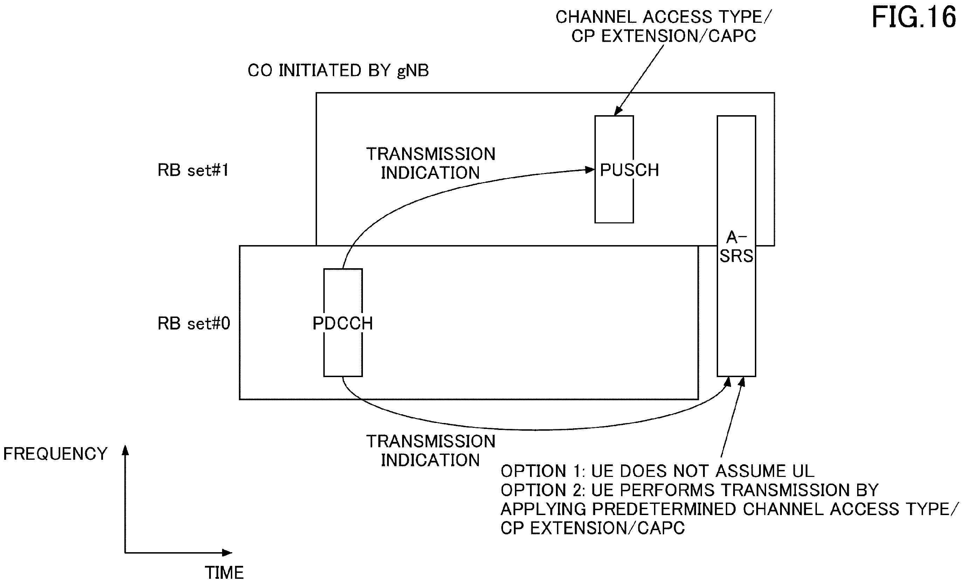

Fig. 16 is a drawing illustrating an example (7) in which PUSCH and SRS are transmitted in a plurality of RB sets according to an embodiment of the present invention. As shown in Fig. 16, PUSCH and A-SRS may be instructed to be transmitted by DCI format 0_1 of PDCCH.

Regarding a case in which one of UL transmissions transmitted in a plurality of RB sets is inside the gNB initiated CO of a certain RB set and another one of UL transmissions is outside the gNB initiated CO of another certain RB set, as shown in Fig. 16, as an option 1, the terminal 20 may not assume that such UL transmissions should be instructed. Further, as an option 2, predetermined channel access type, CP extension value, and CAPC may be applied by the terminal 20.

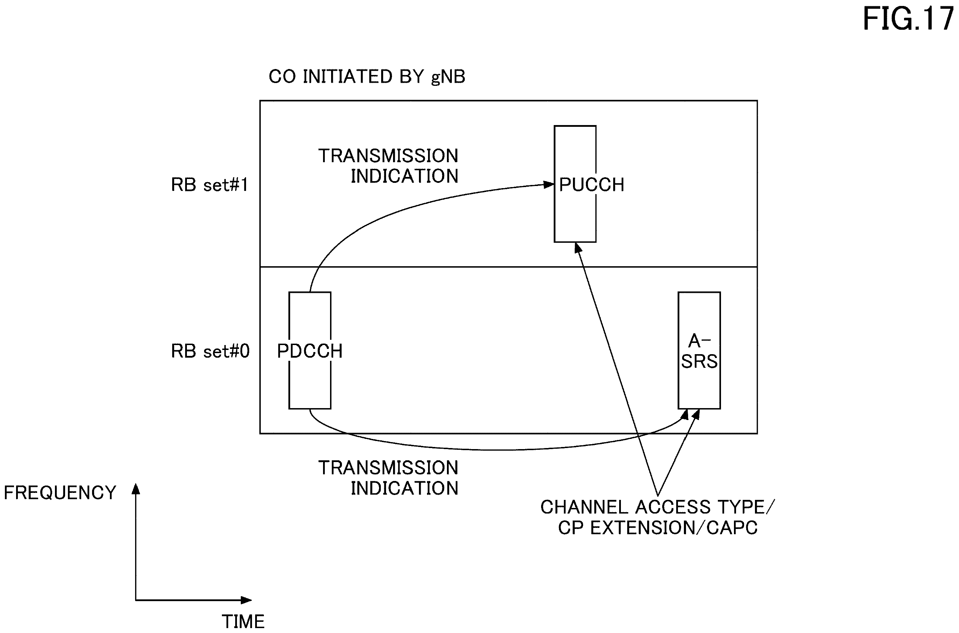

Fig. 17 is a drawing illustrating an example (1) in which PUSCH and SRS are transmitted in a plurality of RB sets according to an embodiment of the present invention. As shown in Fig. 17, PUSCH and A-SRS may be instructed to be transmitted according to DCI format 0-1 of PDCCH.

The terminal 20 may perform transmission by applying the channel access type and the CP extension value indicated by Entry index#n shown in Table 2 to the first UL transmission within each RB set (corresponding to the LBT sub-band). As shown in Fig. 17, A-SRS is transmitted first in the RB set #0, and thus, the channel access type and the CP extension value indicated by Entry index#n are applied to the A-SRS. Further, PUCCH is transmitted first in RB set #1, and thus, the channel access type and the CP extension value indicated by Entry index#n are applied to the PUCCH. Note that the terminal 20 may assume a specific value (e.g., "1") as the CAPC to be applied to A-SRS.

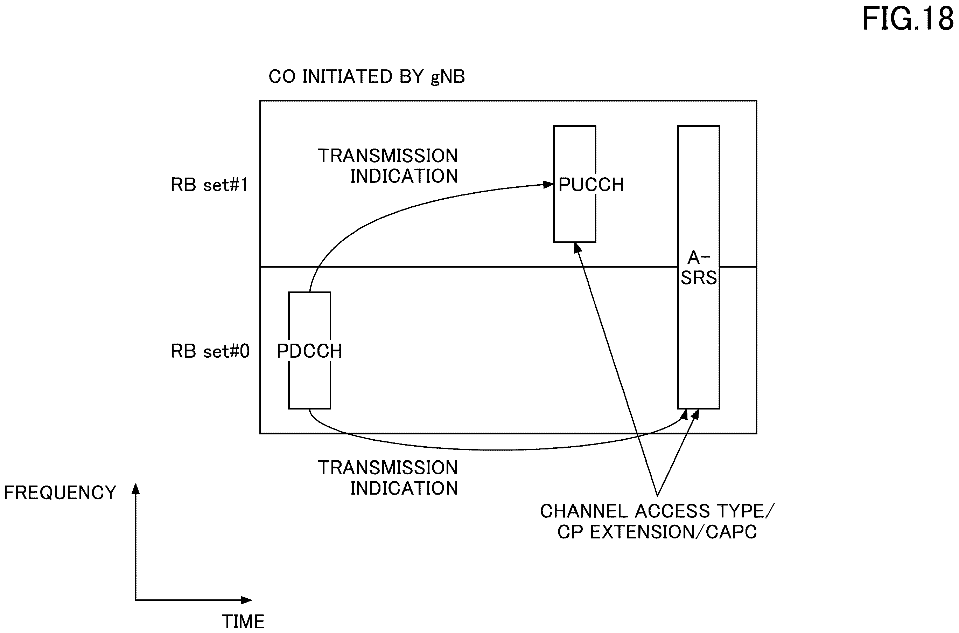

Fig. 18 is a drawing illustrating an example (2) in which PUSCH and SRS are transmitted in a plurality of RB sets according to an embodiment of the present invention. As shown in Fig. 18, PUSCH and A-SRS may be instructed to be transmitted according to DCI format 0-1 of PDCCH.

The terminal 20 may perform transmission by applying the channel access type and the CP extension value indicated by Entry index#n shown in Table 2 to the first UL transmission within each RB set (corresponding to the LBT sub-band). As shown in Fig. 18, A-SRS is transmitted first in the RB set #0, and thus, the channel access type and the CP extension value indicated by Entry index#n are applied to the A-SRS. Further, PUCCH is transmitted first in RB set #1, and thus, the channel access type and the CP extension value indicated by Entry index#n are applied to the PUCCH. Note that the terminal 20 may assume a specific value (e.g., "1") as the CAPC to be applied to A-SRS.

Note that, regarding the A-SRS transmitted by a plurality of RB sets, the channel access type and the CP extension value may be applied to the A-SRS in a case where A-SRS is transmitted first in any one of the RB sets, or only in a case where A-SRS is transmitted first in all of the RB sets.

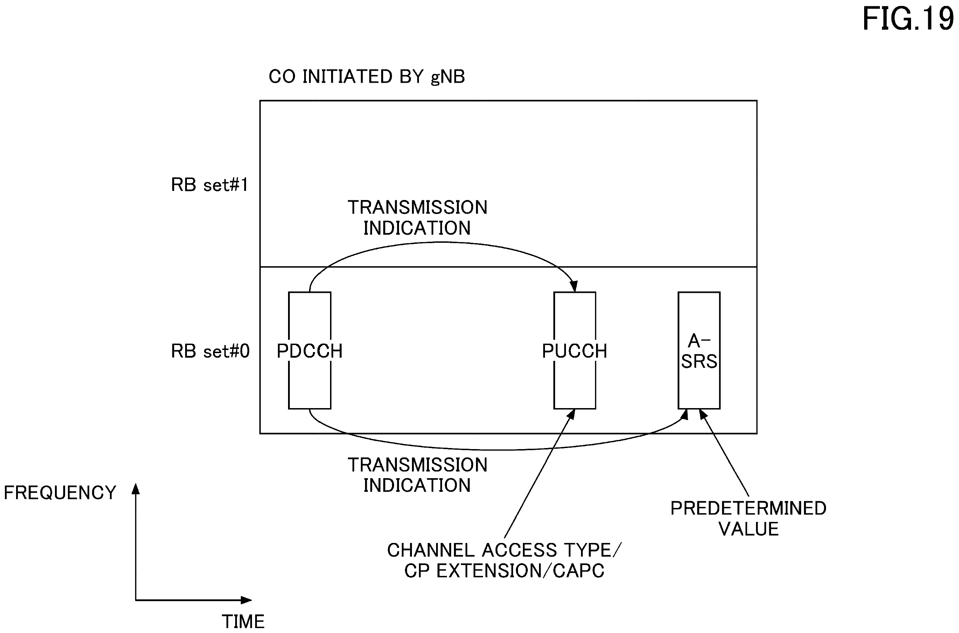

Fig. 19 is a drawing illustrating an example (3) in which PUSCH and SRS are transmitted in a plurality of RB sets according to an embodiment of the present invention. As shown in Fig. 19, PUSCH and A-SRS may be instructed to be transmitted according to DCI format 0_1 of PDCCH.

The terminal 20 may perform transmission by applying the channel access type and the CP extension value indicated by Entry index#n shown in Table 2 to the first UL transmission within each RB set (corresponding to the LBT sub-band). In addition, the terminal 20 may apply the predetermined channel access type and CP extension value to UL transmissions transmitted in the second place and subsequent places in each RB set. The predetermined channel access type and CP extension value may be specified in technical specifications or configured by upper-layer signaling (e.g., indicated by Entry index#x).

In Fig. 19, the channel access type and the CP extension value indicated by Entry index#n shown in Table 2 may be applied to PUCCH because PUCCH is transmitted first in RB set #0 and RB set #1. Further, a predetermined channel access type and CP extension value may be applied to A-SRS because A-SRS is transmitted in the second place in RB set #0 in Fig. 19.

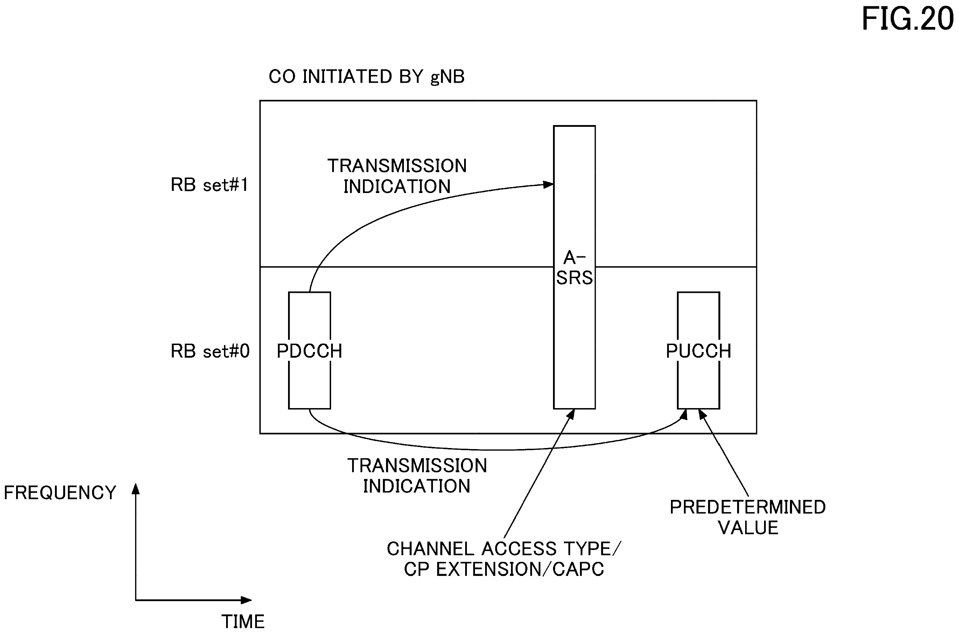

Fig. 20 is a drawing illustrating an example (4) in which PUSCH and SRS are transmitted in a plurality of RB sets according to an embodiment of the present invention. As shown in Fig. 20, PUSCH and A-SRS may be instructed to be transmitted according to DCI format 0_1 of PDCCH.

The terminal 20 may perform transmission by applying the channel access type and the CP extension value indicated by Entry index#n shown in Table 2 to the first UL transmission within each RB set (corresponding to the LBT sub-band). In addition, the terminal 20 may apply the predetermined channel access type and CP extension value to UL transmissions transmitted in the second place and subsequent places in each RB set. The predetermined channel access type and CP extension value may be specified in technical specifications or configured by upper-layer signaling (e.g., indicated by Entry index#x).

In Fig. 20, the channel access type and the CP extension value indicated by Entry index#n shown in Table 2 may be applied to A-SRS because A-SRS is transmitted first in RB set #0 and RB set #1. Further, a predetermined channel access type and CP extension value may be applied to PUCCH because PUCCH is transmitted in the second place in RB set #0 in Fig. 20.

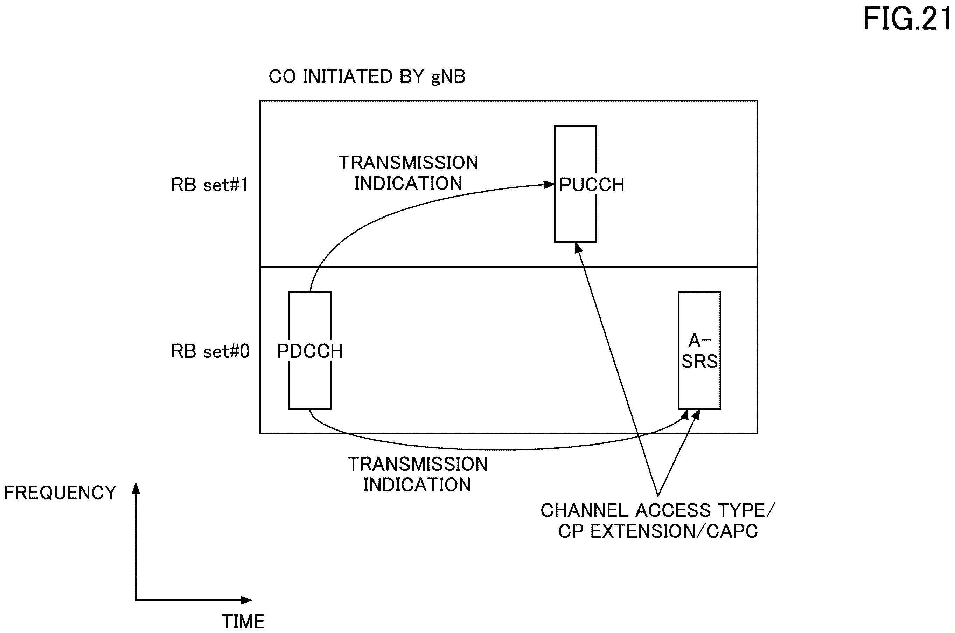

Fig. 21 is a drawing illustrating an example (5) in which PUCCH and SRS are transmitted in a plurality of RB sets according to an embodiment of the present invention. As shown in Fig. 21, PUCCH and A-SRS may be instructed to be transmitted according to DCI format 0_1 of PDCCH.

The terminal 20 may perform transmission by applying the channel access type and the CP extension value indicated by Entry index#n shown in Table 2 to the UL transmission, transmitted within the gNB initiated CO, of each RB set (corresponding to the LBT sub-band). In addition, the terminal 20 may apply the predetermined channel access type and CP extension value to UL transmissions, transmitted within the gNB initiated CO, of each RB set. The predetermined channel access type and CP extension value may be specified in technical specifications or configured by upper-layer signaling (e.g., indicated by Entry index#x).

In Fig. 21, because PUCCH is within the gNB initiated CO of RB set #0 and A-SRS is within the gNB initiated CO of RB set #1, the channel access type and the CP extension value indicated by Entry index #n shown in Table 2 may be applied to the PUCCH and the A-SRS.

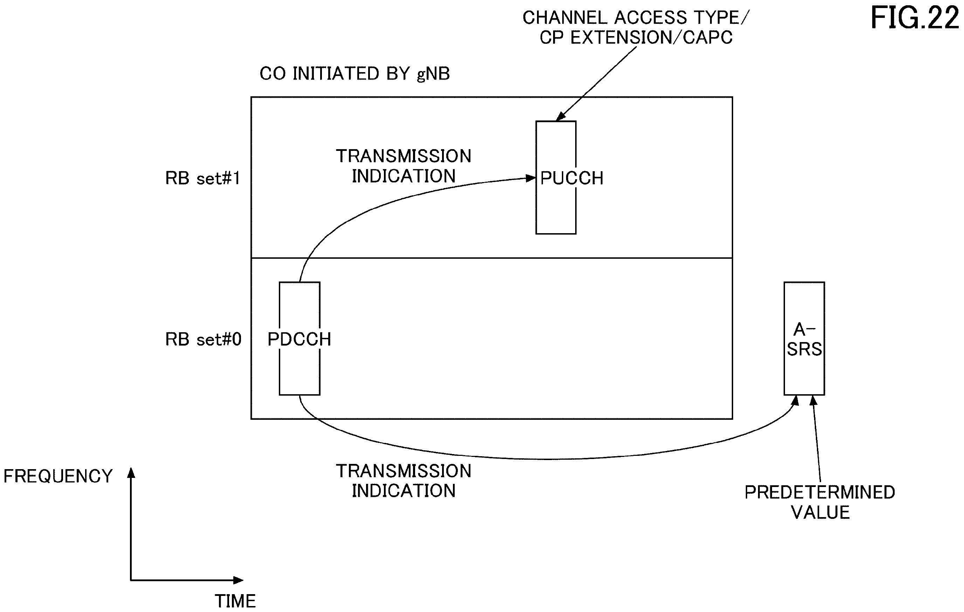

Fig. 22 is a drawing illustrating an example (6) in which PUCCH and SRS are transmitted in a plurality of RB sets according to an embodiment of the present invention. As shown in Fig. 22, PUCCH and A-SRS may be instructed to be transmitted according to DCI format 0_1 of PDCCH.

The terminal 20 may perform transmission by applying the channel access type and the CP extension value indicated by Entry index#n shown in Table 2 to the UL transmission, transmitted within the gNB initiated CO, of each RB set (corresponding to the LBT sub-band). In addition, the terminal 20 may apply the predetermined channel access type and CP extension value to UL transmissions, transmitted within the gNB initiated CO, of each RB set. The predetermined channel access type and CP extension value may be specified in technical specifications or configured by upper-layer signaling (e.g., indicated by Entry index#x).

In Fig. 22, the channel access type and the CP extension value indicated by Entry index#n shown in Table 2 may be applied to PUCCH because PUCCH is within the gNB initiated CO of RB set #1. On the other hand, the predetermined channel access type and CP extension value may be applied to A-SRS because A-SRS is outside the gNB initiated CO of RB set #0.

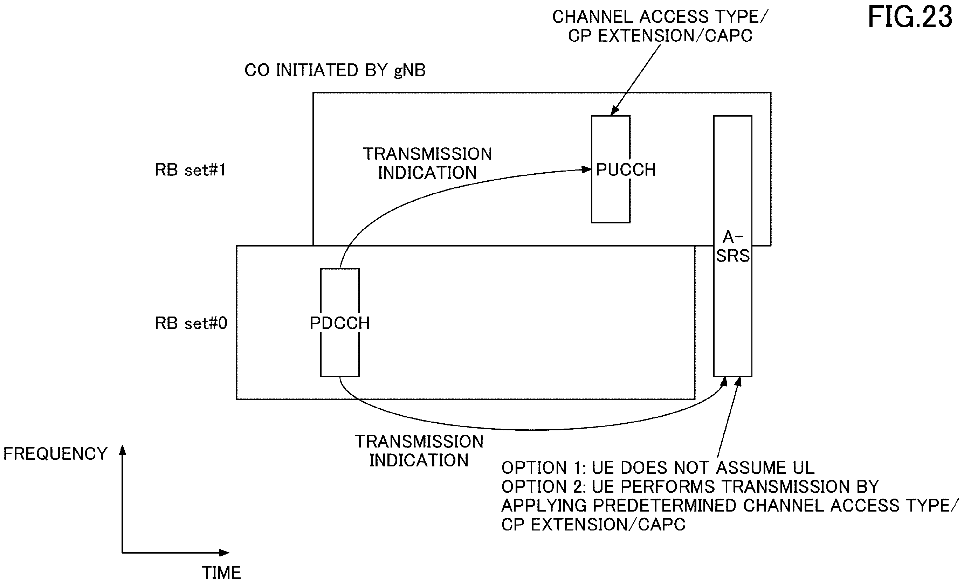

Fig. 23 is a drawing illustrating an example (7) in which PUCCH and SRS are transmitted in a plurality of RB sets according to an embodiment of the present invention. As shown in Fig. 23, PUCCH and A-SRS may be instructed to be transmitted according to DCI format 0_1 of PDCCH.

Regarding a case in which one of UL transmissions transmitted in a plurality of RB sets is inside the gNB initiated CO of a certain RB set and another one of UL transmissions is outside the gNB initiated CO of another certain RB set, as shown in Fig. 23, as an option 1, the terminal 20 may not assume that such UL transmissions should be instructed. Further, as an option 2, predetermined channel access type and CP extension value may be applied by the terminal 20.

According to the embodiments described above, in UL transmissions in NR-U, in a case where multiple UL transmissions are instructed to be performed, the terminal 20 can configure an appropriate channel access type, CP extension value, or CAPC for each UL transmission.

That is, in a wireless communication system, in a case where a plurality of uplink transmissions are scheduled, parameters to be applied to each uplink transmission can be determined.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

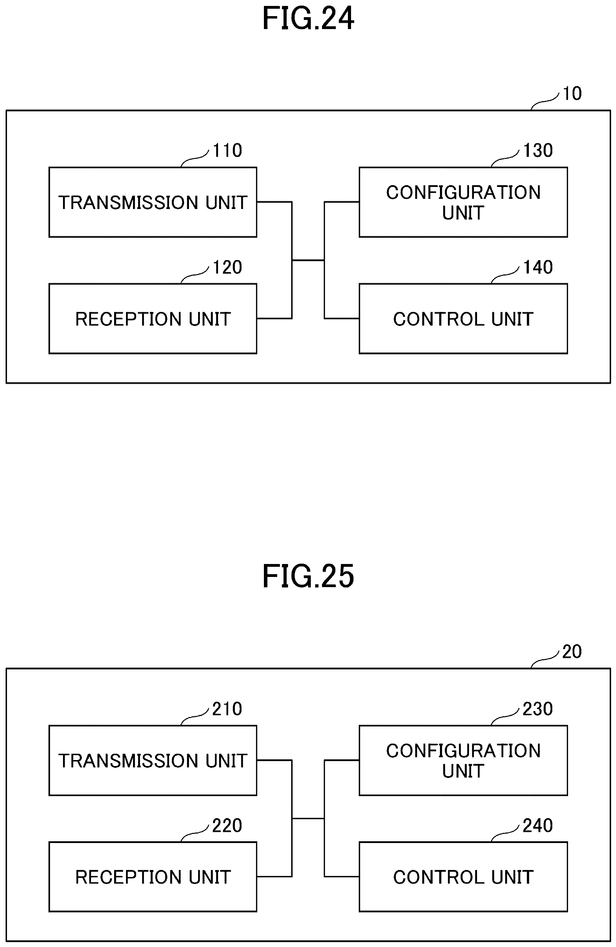

Fig. 24 is a drawing illustrating an example of a functional structure of a base station 10 according to an embodiment of the present invention. As shown in Fig. 24, the base station 10 includes a transmission unit 110, a reception unit 120, a configuration unit 130, and a control unit 140. The functional structure illustrated in Fig. 24 is merely an example. Functional divisions and names of functional units may be anything as long as it can perform operations according to an embodiment of the present invention.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, configurations related to NR-U communications.

The control unit 140 performs control related to UL grant as described in the embodiments. The functional units related to signal transmission in the control unit 140 may be included in the transmission unit 110, and the functional units related to signal reception in the control unit 140 may be included in the reception unit 120.

### <Terminal 20>

Fig. 25 is a drawing illustrating an example of a functional structure of a terminal 20 according to an embodiment of the present invention. As shown in FIG. 25, the terminal 20 includes a transmission unit 210, a reception unit 220, a configuration unit 230, and a control unit 240. The functional structure illustrated in Fig. 25 is merely an example. Functional divisions and names of functional units may be anything as long as it can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. Further, the configuration unit 230 stores preset configuration information. Contents of the configuration information are, for example, configurations related to NR-U communications.

The control unit 240 performs control for transmission with LBT based on UL grants, as described in the embodiments. Further, the control unit 240 controls UL transmission to which the channel access type, the CP extension, or the CAPC is applied depending on the configuration. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 24 and Fig. 25), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

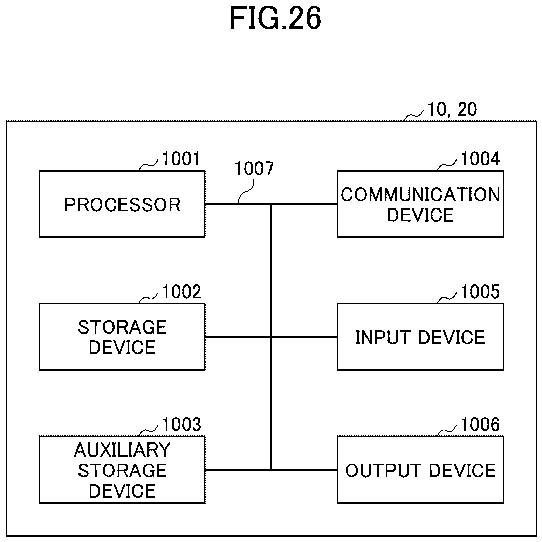

For example, the base station 10, terminal 20, etc., according to an embodiment of the present disclosure may function as a computer for processing the radio communication method of the present disclosure. Fig. 26 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 24 may be realized by control programs that are stored in the storage device 1002 and are executed by the processor 1001. Further, for example, the control unit 240 of the terminal 20 illustrated in Fig. 25 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips . It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor) . The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a micro processor, a digital signal processor (DSP), an ASIC (Application Specific Integrated Circuit), a PLD (Programmable Logic Device), a FPGA (Field Programmable Gate Array), etc. , and a part or all of each functional block may be realized by the hardware. For example, the processor 1001 may be implemented by at least one of the above hardware elements.

### (Embodiment summary)

As described above, according to an embodiment of the present invention invention, a terminal is provided that includes a reception unit configured to receive control information including information for allocating a plurality of uplink transmissions, from a base station, a control unit configured to identify a parameter to be applied to the plurality of uplinks, based on the control information, and a transmission unit configured to transmit the plurality of uplinks to the base station by applying the identified parameter to the plurality of uplinks.

According to the embodiments described above, in UL transmissions in NR-U, in a case where multiple UL transmissions are instructed to be performed, the terminal 20 can configure an appropriate channel access type, CP extension value, or CAPC for each UL transmission. That is, in a wireless communication system, in a case where a plurality of uplink transmissions are scheduled, a parameter to be applied to each uplink transmission can be determined.

The parameter may be a channel access type, a CP extension value, or a CAPC. According to the arrangement described above, in UL transmissions in NR-U, in a case where multiple UL transmissions are instructed to be performed, the terminal 20 can configure an appropriate channel access type, CP extension value, or CAPC for each UL transmission.

The transmission unit may apply the identified parameter to an uplink shared channel or an uplink control channel, and apply a predetermined parameter to an uplink reference signal. According to the arrangement described above, in UL transmissions in NR-U, in a case where multiple UL transmissions are instructed to be performed, the terminal 20 can configure an appropriate channel access type, CP extension value, or CAPC for each UL transmission.

The transmission unit may apply the identified parameter to an uplink transmission that is transmitted first within each RB (Resource block) set, and apply the predetermined parameter to an uplink transmission that is transmitted second or later. According to the arrangement described above, in UL transmissions in NR-U, in a case where multiple UL transmissions are instructed to be performed, the terminal 20 can configure an appropriate channel access type, CP extension value, or CAPC for each UL transmission.

In a case where an uplink transmission is within the CO of a certain RB set and is outside the CO of another RB set, the transmission unit may apply predetermined parameters to the uplink transmission. According to the arrangement described above, in UL transmissions in NR-U, in a case where multiple UL transmissions are instructed to be performed, the terminal 20 can configure an appropriate channel access type, CP extension value, or CAPC for each UL transmission.

Further, according to an embodiment of the present invention invention, a communication method performed by a terminal is provided that includes receiving control information including information for allocating a plurality of uplink transmissions, from a base station, identifying a parameter to be applied to the plurality of uplinks, based on the control information, and transmitting the plurality of uplinks to the base station by applying the identified parameter to the plurality of uplinks.

According to the embodiments described above, in UL transmissions in NR-U, in a case where multiple UL transmissions are instructed to be performed, the terminal 20 can configure an appropriate channel access type, CP extension value, or CAPC for each UL transmission. That is, in a wireless communication system, in a case where a plurality of uplink transmissions are scheduled, parameters to be applied to each uplink transmission can be determined.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message . The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW) . According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer) . The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling) . Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g. , three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)) . The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.) . In this case, the function of the base station 10 described above may be provided by the terminal 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations . The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP) . For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may changed in various ways .

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is noted that A-SRS in the present disclosure is an example of a uplink reference signal.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present international patent application is based on and claims priority to Japanese patent application No. 2020-029728 filed on February 25, 2020, the entire contents of which are hereby incorporated herein by reference.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage apparatus
1003 Auxiliary storage apparatus
1004 Communication apparatus
1005 Input apparatus
1006 Output device

## Claims

1. A terminal comprising:
a reception unit configured to receive control information including information for allocating a plurality of uplink transmissions, from a base station;
a control unit configured to identify a parameter to be applied to the plurality of uplinks, based on the control information; and
a transmission unit configured to transmit the plurality of uplinks to the base station by applying the identified parameter.

2. The terminal as claimed in claim 1, wherein the parameter is a channel access type, a CP extension value, or a CAPC.

3. The terminal as claimed in claim 2, wherein the transmission unit applies the identified parameter to an uplink shared channel or an uplink control channel, and applies a predetermined parameter to an uplink reference signal.

4. The terminal as claimed in claim 2, wherein the transmission unit applies the identified parameter to an uplink transmission that is transmitted first within each RB (Resource block) set, and applies a predetermined parameter to an uplink transmission that is transmitted second or later.

5. The terminal as claimed in claim 2, wherein, in a case where an uplink transmission is within a CO (Channel occupancy) of an RB set and is outside a CO of another RB set, the transmission unit applies a predetermined parameter to the uplink transmission.

6. A communication method performed by a terminal, the communication method comprising:
receiving control information including information for allocating a plurality of uplink transmissions, from a base station;
identifying a parameter to be applied to the plurality of uplinks, based on the control information; and
transmitting the plurality of uplinks to the base station by applying the identified parameter.
